Europäisches Patentamt

European Patent Office

Office européen des brevets

(11) Veröffentlichungsnummer: **0 412 193 A1**

# (12) EUROPÄISCHE PATENTANMELDUNG

(21) Anmeldenummer: 89114841.3

(22) Anmeldetag: 10.08.89

(51) Int. Cl.5: **G01M 3/32**, G01M 3/34

(43) Veröffentlichungstag der Anmeldung:
**13.02.91 Patentblatt 91/07**

(84) Benannte Vertragsstaaten:
**AT BE CH DE ES FR GB IT LI LU NL SE**

(71) Anmelder: **Siemens Aktiengesellschaft**
**Wittelsbacherplatz 2**
**D-8000 München 2(DE)**

(72) Erfinder: **Stadler, Heinz**
**Mettnauerstrasse 19**
**D-8000 München 60(DE)**
Erfinder: **Heinzl, Alfred, Dipl.-Ing. (FH)**
**Geigenberger Strasse 29**
**D-8000 München 71(DE)**
Erfinder: **Krakowetz, Wilhelm**
**Sudetenstrasse 7**
**D-8938 Buchloe(DE)**

(54) **Verfahren und Vorrichtung zur Dichtheitsprüfung elektrischer Bauelemente.**

(57) Zur Dichtheitsprüfung eines Bauelementes mit Lüftungsloch wird ein Prüfrüssel (12) dichtend auf den Rand des Lüftungsloches (5) aufgesetzt, so daß das Lüftungsloch über einen Prüfkanal (14) mit einem Zylinderraum (9) in Verbindung gebracht wird. Mittels eines Kolbens (10) wird das Volumen des Zylinderraums verändert. Über eine mit dem Prüfkanal (14) in Verbindung stehende Druckmeßeinrichtung (17) wird gemessen, ob durch die Volumenänderung im Zylinderraum (9) ein vorgegebener Unterdruck oder Überdruck erreicht bzw. während einer bestimmten Zeitspanne danach aufrechterhalten wird.

FIG 1

EP 0 412 193 A1

# VERFAHREN UND VORRICHTUNG ZUR DICHTHEITSPRÜFUNG ELEKTRISCHER BAUELEMENTE

Die Erfindung betrifft ein Verfahren und eine Vorrichtung zur Dichtheitsprüfung elektrischer, einen Innenhohlraum in einem geschlossenen Gehäuse aufweisender Bauelemente, wobei das Gehäuse ein nachträglich getrennt verschließbares Lüftungsloch aufweist.

Aus der EP-A-00 60 548 sind bereits ein Verfahren und eine Vorrichtung zur Dichtheitsprüfung von elektrischen Bauelementen bekannt, wobei die zu prüfenden Bauelemente in einen Rezipienten eingelegt werden, welcher mit einem Druckmeßsystem in Verbindung steht. Nach dem Verschließen des Rezipienten wird durch Verschieben eines Kolbens in einem Zylinder eine Druckänderung in dem Rezipienten hervorgerufen. Ändert sich in einer vorgegebenen Zeitspanne der Über- oder Unterdruck in dem Rezipienten, so wird dies über eine Druckmessung zur Anzeige eines Lecks ausgewertet.

Das bekannte Verfahren ist jedoch in der Massenfertigung insofern aufwendig, als jedes Bauelement einzeln erst in den Rezipienten eingebracht und dieser Rezipient dicht verschlossen werden muß, bevor die eigentliche Dichtheitsprüfung beginnen kann.

Beim Abdichten von Bauelementen mit Vergußmasse hat es sich als zweckmäßig herausgestellt, ein Lüftungsloch in einer Gehäusewand vorzusehen, welches während des Einbringens und Aushärtens der Vergußmasse und der damit verbundenen Temperaturänderungen einen Druckausgleich ermöglicht. Dieses Lüftungsloch wird üblicherweise nachträglich getrennt verschlossen, beispielsweise mittels eines aufgebrachten Harztropfens oder durch thermische Verformung der das Lüftungsloch umgebenden Wandbereiche. Für Bauelemente mit einem derartigen Lüftungsloch ist zwar die oben beschriebene Methode ebenfalls anwendbar, doch kann diese Prüfung im Rezipienten erst sinnvoll durchgeführt werden, wenn auch das Lüftungsloch verschlossen ist. Es läßt sich deshalb nicht feststellen, ob eine festgestellte Undichtigkeit im Bereich des Lüftungsloches oder in den übrigen abgedichteten Teilen liegt.

Aufgabe der Erfindung ist es, ein Verfahren und eine Vorrichtung zur Dichtheitsprüfung von Bauelementen mit Lüftungsloch anzugeben, wobei sowohl vor als auch nach dem Verschließen des Lüftungsloches eine Prüfung auf Dichtheit möglich ist. Insbesondere soll dabei die Handhabung des Bauelementes bei der Dichtheitsprüfung vereinfacht und die Prüfung selbst schneller durchgeführt werden können.

Erfindungsgemäß wird diese Aufgabe mit einem Verfahren zur Dichtheitsprüfung der eingangs genannten Art gelöst, welches folgende Schritte aufweist:
- Das Lüftungsloch wird mittels einer dichten Verbindung über einen Prüfkanal mit einem Prüfzylinder verbunden,
- das Gasvolumen in dem Prüfzylinder wird durch Verschiebung eines Kolbens verändert,
- die durch die Volumenänderung erzeugte Druckänderung in dem Prüfzylinder bzw. dem Prüfkanal wird während der Verschiebung des Kolbens und/oder während einer vorgegebenen Zeitspanne danach gemessen.

Nach dem erfindungsgemäßen Verfahren genügt es also, den Prüfzylinder und die Druckmeßeinrichtung mit dem Lüftungsloch des Bauelementes zu verbinden, was beispielsweise durch Aufsetzen eines Prüfrüssels auf den Rand des Lüftungsloches geschehen kann. Dadurch erübrigt sich das Einbringen des Bauelementes in einen eigenen Rezipienten sowie das dichte Verschließen dieses Rezipienten, wodurch sowohl Geräteaufwand als auch Zeit für die Vorbereitung der Dichtheitsprüfung eingespart wird. Die erfindungsgemäße Dichtheitsprüfung kann somit in den Arbeitstakt einer Fertigungsstraße einbezogen werden.

Ein weiterer Vorteil des erfindungsgemäßen Verfahrens besteht darin, daß bei einem Bauelement mit Lüftungsloch sowohl bei offenem Lüftungsloch die Dichtheit des ansonsten abgedichteten bauelementes und nach Verschließen des Lüftungsloches auch die Dichtheit dieses nachträglichen Verschlusses geprüft werden können. Hierzu wird zweckmäßigerweise bei offenem Lüftungsloch ein Unterdruck in dem Prüfzylinder erzeugt, während bei verschlossenem Lüftungsloch ein Überdruck in dem Prüfzylinder erzeugt wird.

Um die Hysteresewirkung bei der Druckänderung weitgehend auszuschließen, wird zweckmäßigerweise der Kolben in mindestens zwei aufeinanderfolgenden Schritten mit Zwischenintervall in die jeweilige Endstellung gebracht, so daß ein Hin- und Herschalten der Meßeinrichtung vermieden wird.

Eine erfindungsgemäße Vorrichtung zur Lösung der genannten Aufgabe weist folgende Merkmale auf:
- eine Haltevorrichtung für das zu prüfende Bauelement,
- einen Prüfzylinder mit einem Zylinderraum, dessen Volumen durch einen verstellbaren Kolben veränderbar ist,
- einen von dem Zylinderraum abzweigenden, in Richtung auf ein in der Haltevorrichtung befindliches Bauelement verstellbaren Prüfrüssel, welcher dichtend auf den Rand eines Lüftungsloches aufsetzbar ist, und

- eine mit dem Zylinderraum in Verbindung stehende Druckmeßeinrichtung.

Zweckmäßige Ausgestaltungen dieser Vorrichtung sind in den Unteransprüchen angegeben.

Die Erfindung wird nachfolgend an einem Ausführungsbeispiel anhand der Zeichnung näher erläutert. Es zeigen

Figur 1 eine erfindungsgemäße Vorrichtung zur Dichtheitsprüfung in schematischer Darstellung,

Figur 2 eine Vergrößerung des Details II aus Figur 1.

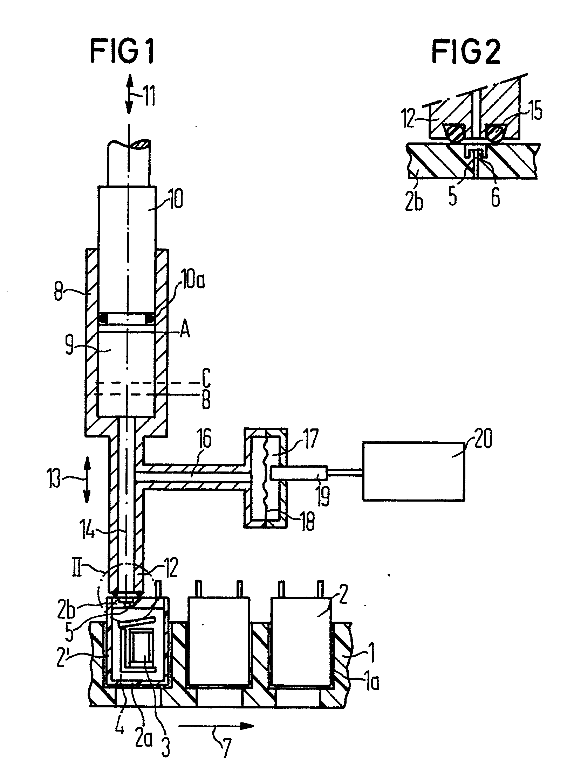

In Figur 1 ist ein Werkstückträger 1 gezeigt, der in Form eines Magazins mehrere Aufnahmen 1a für Bauelemente 2 besitzt. Bei diesen Bauelementen 2 handelt es sich im vorliegenden Beispiel um elektromagnetische Relais, wie das aufgeschnittene Bauelement 2' zeigt. Das im Inneren angeordnete Magnetsystem 3 ist nur schematisch dargestellt; außerdem sind die zugehörigen Kontakte nicht gezeichnet. Es soll dabei lediglich zum Ausdruck kommen, daß es sich um ein Gehäuse mit einem Innenraum 4 handelt, welcher mit einem Gas, beispielsweise Luft, gefüllt ist. Dieser Innenraum 4 ist jedoch abgedichtet, beispielsweise durch Vergußmasse, welche die Zwischenräume zwischen einer Kappe 2a und einem Sockel 2b ausfüllt. Da beim Einbringen der Vergußmasse und beim Aushärten eine Erwärmung des Bauelementes erforderlich ist, ist im Sockel 2b ein Lüftungsloch 5 vorgesehen, durch das ein Druckausgleich möglich ist. Erst nachträglich wird dann dieses Lüftungsloch 5, etwa durch Warmverformung des Zapfens 6, verschlossen (siehe Figur 2).

Mit dem Werkstückträger 1 wird also jedes Bauelement 2 im Arbeitstakt in Richtung des Pfeiles 7 bewegt und an eine Dichtheitsprüfstation herangeführt. Diese weist einen Prüfzylinder 8 auf, dessen Zylinderraum 9 durch einen Kolben 10 veränderbar ist. Der Kolben 10 wird in Richtung des Doppelpfeiles 11 in dem Prüfzylinder 8 bewegt.

Am Ausgang des Zylinderraums 9 ist ein Prüfrüssel 12 angebracht, der in Richtung des Doppelpfeiles 13 bewegbar ist. Im gezeigten Beispiel ist der Prüfrüssel 12 mit dem Prüfzylinder 8 starr verbunden, so daß beide Teile gemeinsam abgesenkt und gehoben werden können. Es wäre aber auch denkbar, den Prüfrüssel flexibel mit dem Prüfzylinder zu verbinden und durch eine geeignete Vorrichtung auf das jeweilige Bauelement aufzusetzen. Der Prüfrüssel besitzt im Inneren einen Prüfkanal 14, der die Verbindung zwischen dem Zylinderraum 9 und dem Bauteilinneren 4 herstellt. Zu diesem Zweck wird der Prüfrüssel 12 auf den Rand des Lüftungsloches 5 aufgesetzt, wobei ein in der Endfläche des Prüfrüssels 12 befestigter Dichtungsring 15 die Abdichtung bewirkt (siehe Figur 2).

Mit dem Prüfrüssel 12 ist über einen Meßkanal 16 ein Druckschalter 17 verbunden, dessen Membran 18 bei einem bestimmten Druck eine Kontakteinrichtung 19 betätigt. Die Betätigung dieses Kontaktes wird über eine Auswerteeinrichtung 20 zur Anzeige oder zur Erzeugung bestimmter Schaltsignale ausgewertet. Anstelle des im Beispiel verwendeten Membranschalters 17 könnte aber auch eine andere Druckmeßeinrichtung verwendet werden.

Beim Prüfvorgang wird der Prüfrüssel 12 zentrisch über das Lüftungsloch 5 des Bauteiles 2' abgesenkt. Dann wird der Kolben 10, der ebenfalls mit einem Dichtring 10a in dem Zylinder 8 dicht geführt ist, von der Stellung A in die Stellung B verschoben. Über den Kanal 14 strömt nun das im Zylinderraum 9 befindliche Gas in den Innenraum 4 des Bauelementes 2' und erzeugt dort einen Überdruck. Dabei sei erwähnt, daß zweckmäßigerweise der Kolben 10 zunächst in die Zwischenstellung C und dann erst in die Endstellung B gebracht wird, um Hystereseerscheinungen beim Meßvorgang auszuschalten. Dies ist auch in der EP-A-00 60 548 beschrieben.

Hat das Bauelement 2' ein großes Leck, so schaltet der Druckschalter 17 erst gar nicht durch. Befindet sich in dem Bauelement aber ein kleines Leck, so schaltet der Druckschalter 17 zunächst durch, fällt aber innerhalb der vorgegebenen Prüfzeit wieder ab. Bei dichten Bauteilen ist der Druckschalter während der ganzen Prüfzeit durchgeschaltet.

Nach Abschluß der Prüfung wird die Prüfeinrichtung mit dem Zylinder 8 und dem Prüfrüssel 12 wieder angehoben, und das nächste Bauelement wird im Takt unter die Prüfeinrichtung gebracht.

Nach dem Verschließen des Lüftungsloches 5 durch Aufbringen eines Harztropfens oder durch die erwähnte thermische Verformung des Zapfens 6 kann mit der gleichen Vorrichtung auch die Abdichtung des Lüftungsloches selbst überprüft werden. Dabei wird zweckmäßigerweise der Kolben umgekehrt zu der vorherigen Beschreibung von der Stellung B in die Stellung A verschoben, um ein Druckgefälle vom Bauteilinneren zur Außenseite hin zu erzeugen.

**Ansprüche**

1. Verfahren zur Dichtheitsprüfung elektrischer, einen Innenhohlraum in einem geschlossenen Gehäuse aufweisender Bauelemente (2), wobei das Gehäuse (2a, 2b) ein nachträglich getrennt verschließbares Lüftungsloch (5) aufweist, mit folgenden Schritten:

- das Lüftungsloch (5) wird mittels einer dichten Verbindung über einen Prüfkanal (14) mit einem Prüfzylinder verbunden,

- das Gasvolumen in dem Prüfzylinder (8) wird durch Verschiebung eines Kolbens (10) verändert und
- die durch die Volumenänderung erzeugte Druckänderung in dem Prüfzylinder bzw. dem Prüfkanal (14) wird während der Verschiebung des Kolbens (10) und/oder während einer vorgegebenen Zeitspanne danach gemessen.

2. Verfahren nach Anspruch 1, **dadurch gekennzeichnet,** daß die dichte Verbindung durch Aufsetzen eines den Prüfkanal (14) enthaltenden Prüfrüssels (12) auf den Rand des Lüftungsloches (5) vorgenommen wird.

3. Verfahren nach Anspruch 1 oder 2, **dadurch gekennzeichnet,** daß bei offenen Lüftungsloch (5) ein Unterdruck in dem Prüfzylinder (8) erzeugt und die Erreichung und/oder die Aufrechterhaltung eines vorgegebenen Unterdrucks als Dichtheitskriterium gemessen wird.

4. Verfahren nach Anspruch 1 oder 2, **dadurch gekennzeichnet,** daß bei verschlossenem Lüftungsloch (5) ein Überdruck in dem Prüfzylinder (8) erzeugt wird und daß die Erreichung und/oder Aufrechterhaltung eines vorgegebenen Überdrucks als Dichtheitskriterium gemessen wird.

5. Verfahren nach einem der Ansprüche 1 bis 4, **dadurch gekennzeichnet,** daß der Kolben (10) in mindestens zwei aufeinanderfolgenden Schritten (A-C, C-B) mit Zwischenintervall betätigt wird.

6. Vorrichtung zur Dichtheitsprüfung elektrischer, einen Innenhohlraum (4) in einem geschlossenen Gehäuse aufweisender Bauelemente (2), wobei das Gehäuse ein nachträglich verschließbares Lüftungsloch (5) aufweist, mit folgenden Merkmalen:
- einer Haltevorrichtung (1) für das zu prüfende Bauelement (2, 2'),
- einem Prüfzylinder (8) mit einem Zylinderraum (9), dessen Volumen durch einen verstellbaren Kolben (10) veränderbar ist,
- einem von dem Zylinderraum (9) abzweigenden, in Richtung auf ein in der Haltevorrichtung (1) befindliches Bauelement (2') verstellbaren Prüfrüssel (12), welcher dichtend auf den Rand eines Lüftungsloches (5) aufsetzbar ist, und
- einer mit dem Zylinderraum (9) in Verbindung stehenden Druckmeßeinrichtung (17).

7. Vorrichtung nach Anspruch 6, **dadurch gekennzeichnet,** daß der Prüfkanal (14) in einem rohrförmigen Prüfrüssel (12) ausgebildet ist, dessen freies Ende an der Stirnseite einen Dichtring (15) beträgt.

8. Vorrichtung nach Anspruch 6 oder 7, **dadurch gekennzeichnet,** daß die Druckmeßeinrichtung (17) ein pneumatisch-elektrischer Wandler, z. B. ein Membranschalter, ist, dessen Druckeingang über einen Meßkanal (16) mit dem Prüfkanal (14) in Verbindung steht.

9. Vorrichtung nach einem der Ansprüche 6 bis 8, **dadurch gekennzeichnet,** daß der Prüfrüssel (12) zentrisch in Verlängerung des Prüfzylinders (8) an diesem angebracht ist und daß der Prüfzylinder zusammen mit dem Prüfrüssel (12) in Richtung auf das zu prüfende Bauelement (2') von diesem weg bewegbar ist.

10. Vorrichtung nach einem der Ansprüche 6 bis 9, **dadurch gekennzeichnet,** daß die Haltevorrichtung (1) Teil einer Taktfördereinrichtung ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-3 108 459 (VOLKSWAGENWERK AG) * Seite 4 * --- | 1-4 | G 01 M 3/32 G 01 M 3/34 |
| Y | US-A-3 982 421 (R.G. WALLACE) * Spalten 2-4 * --- | 1-4 | |
| Y | EP-A-0 050 822 (CIT-ALCATEL S.A.) * Figur 1; Seiten 2-3 * --- | 1-4 | |
| A | WO-A-8 600 701 (MOSS GLASVAERK) * Ansprüche 1-6 * --- | 1 | |
| A | DE-A-1 773 352 (FRIED. KRUPP GMBH) * Seiten 2,3 * --- | 1,2 | |
| A,D | EP-A-0 060 548 (SIEMENS AG) * Seiten 6,7 * ----- | 1,10 | |

**RECHERCHIERTE SACHGEBIETE (Int. Cl.5)**

G 01 M 3/00

Der vorliegende Recherchenbericht wurde für alle Patentansprüche erstellt

| Recherchenort | Abschlußdatum der Recherche | Prüfer |
|---|---|---|
| BERLIN | 19-12-1989 | DIETRICH A. |